# EUROPEAN PATENT APPLICATION

(11) **EP 4 704 487 A1**
(43) Date of publication of application: **04.03.2026**
(21) Application number: 24797033.8
(22) Date of filing: 24.04.2024
(51) Int. Cl.: H04W 74/08, H04W 24/08

(54) **TERMINAL AND WIRELESS COMMUNICATION METHOD**

(30) Priority: 26.04.2023 JP 2023072382
(71) Applicant: NTT DOCOMO, INC., Tokyo 100-6150 (JP)
(72) Inventor: MIN Tianyang, Tokyo 100-6150 (JP)
(74) Representative: Hoffmann Eitle
(86) International application number: PCT/JP2024/015973
(87) International publication number: WO 2024/225287

(57) **Abstract**

A terminal performs a random access procedure, and transmits to a network a random access report including information indicating whether or not a repetition transmission of a specific message in the random access procedure has been performed.

## Description

### Technical Field

The present disclosure relates to a terminal and a radio communication method that support a repetition transmission of a message in a random access channel procedure.

### Background Art

The 3rd Generation Partnership Project (3GPP: registered trademark) has prepared a specification for the 5th generation mobile communication system (also called 5G, New Radio (NR), or Next Generation (NG)) and is also preparing next generation specifications called Beyond 5G, 5G Evolution, or 6G.

In Release 18 of the 3GPP, a Work Item related to Coverage Enhancement (CE) in NR has been agreed (Non-Patent Literature 1).

Specifically, when uplink (UL) coverage from a terminal (User Equipment, UE) is insufficient (a random access channel (PRACH: Physical Random Access Channel) does not easily reach a radio base station (gNB)), application of a repetition transmission (Msg1 repetition) of an Msg1 (Random Access Preamble) is considered. The Msg1 repetition may be called Multiple PRACH transmission.

### Citation List

### Non Patent Literature

Non-Patent Literature 1: "Revised WID on Further NR coverage enhancements", RP-221858, 3GPP TSG RAN Meeting #96, 3GPP, June 2022

### Summary of Invention

When a random access procedure fails, a UE can transmit a RACH report, to a gNB, which includes a RACH resource used and a reason for the failure.

However, the gNB cannot recognize the cause or the like that led the UE to perform the Msg1 repetition, that is, Multiple PRACH transmission, and thus it is difficult to improve quality.

Accordingly, the present disclosure has been made in view of this situation, and an object thereof is to provide a terminal and a radio communication method that can contribute to realizing a more highly accurate random access procedure.

An aspect of the present disclosure is a terminal (UE 200) including: a control unit (control unit 270) that performs a random access procedure; and a transmitting unit (control signal and reference signal processing unit 240) that transmits to a network, a random access report including information indicating whether or not a repetition transmission of a specific message in the random access procedure has been performed.

### Brief Description of Drawings

[FIG. 1] FIG. 1 is an overall schematic configuration diagram of a radio communication system 10.
[FIG. 2] FIG. 2 is a diagram illustrating a configuration example of a radio frame, a subframe, and a slot used in the radio communication system 10.
[FIG. 3] FIG. 3 is a functional block configuration diagram of a gNB 100 and a UE 200.
[FIG. 4] FIG. 4 is a diagram illustrating an example of a random access sequence including a Repetition of an Msg3.
[FIG. 5] FIG. 5 is a diagram illustrating a sequence of a RACH report.
[FIG. 6] FIG. 6 is a diagram illustrating a sequence of reporting information on Multiple PRACH transmission.
[FIG. 7] FIG. 7 is a diagram illustrating an example of mapping between a DL quality threshold and the number of Repetitions.
[FIG. 8] FIG. 8 is a diagram illustrating a hardware configuration example of the gNB 100 and the UE 200.
[FIG. 9] FIG. 9 is a diagram illustrating a configuration example of a vehicle 2001.

### Description of Embodiments

Hereinafter, an embodiment will be described based on the drawings. Note that the same functions and configurations are denoted by the same or similar reference signs, and their descriptions will be omitted as appropriate.

### (1) Overall schematic configuration of radio communication system

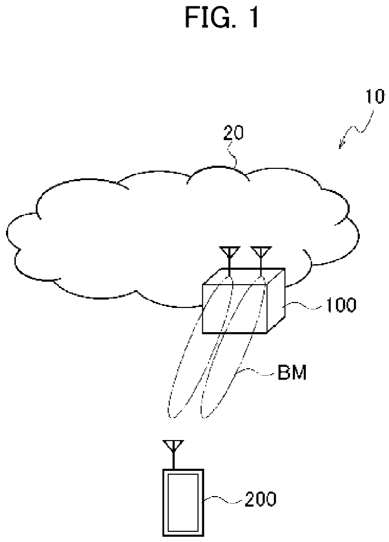

FIG. 1 is an overall schematic configuration diagram of a radio communication system 10 according to the present embodiment. The radio communication system 10 is a radio communication system according to 5G New Radio (NR), and includes a Next Generation-Radio Access Network 20 (hereinafter, NG-RAN 20 and a terminal 200 (User Equipment 200, hereinafter, UE 200).

Note that, the radio communication system 10 may be a radio communication system according to a scheme called Beyond 5G, 5G Evolution, or 6G.

The NG-RAN 20 includes a radio base station 100 (hereinafter, gNB 100). Note that, the specific configuration of the radio communication system 10 including the number of gNBs and UEs is not limited to that of the example illustrated in FIG. 1.

The NG-RAN 20 actually includes multiple NG-RAN Nodes, specifically, gNBs (or ng-eNBs), and is connected to a core network (5GC, not illustrated) according to 5G. Note that, the NG-RAN 20 and 5GC may be simply expressed as a "network".

The gNB 100 is a radio base station according to NR and performs radio communication with the UE 200 according to NR. The gNB 100 and the UE 200 can be compatible with Massive MIMO that generates a beam BM with higher directivity by controlling radio signals transmitted from multiple antenna elements, carrier aggregation (CA) that uses multiple component carriers (CCs) in a bundle, dual connectivity (DC) that performs communication at the same time between the UE and each of multiple NG-RAN Nodes, and the like.

The radio communication system 10 is compatible with an FR1 and an FR2. Frequency bands of the respective FRs (Frequency Ranges) are as follows.

- FR1: 410 MHz to 7.125 GHz
- FR2: 24.25 GHz to 52.6 GHz

In the FR1, a Sub-Carrier Spacing (SCS) of 15, 30, or 60 kHz may be used, and a bandwidth (BW) of 5 to 100 MHz may be used. The FR2 has a higher frequency than the FR1, the SCS of 60 or 120 kHz (240 kHz may be included) may be used, and the bandwidth (BW) of 50 to 400 MHz may be used.

Further, the radio communication system 10 may also be compatible with a higher frequency band than the FR2 frequency band. Specifically, the radio communication system 10 is compatible with a frequency band greater than 52.6 GHz and up to 114.25 GHz.

Cyclic Prefix-Orthogonal Frequency Division Multiplexing (CP-OFDM) / Discrete Fourier Transform-Spread (DFT-S-OFDM) having larger Sub-Carrier Spacing (SCS) may be applied. DFT-S-OFDM may be applied not only to uplink (UP) but also to downlink (DL).

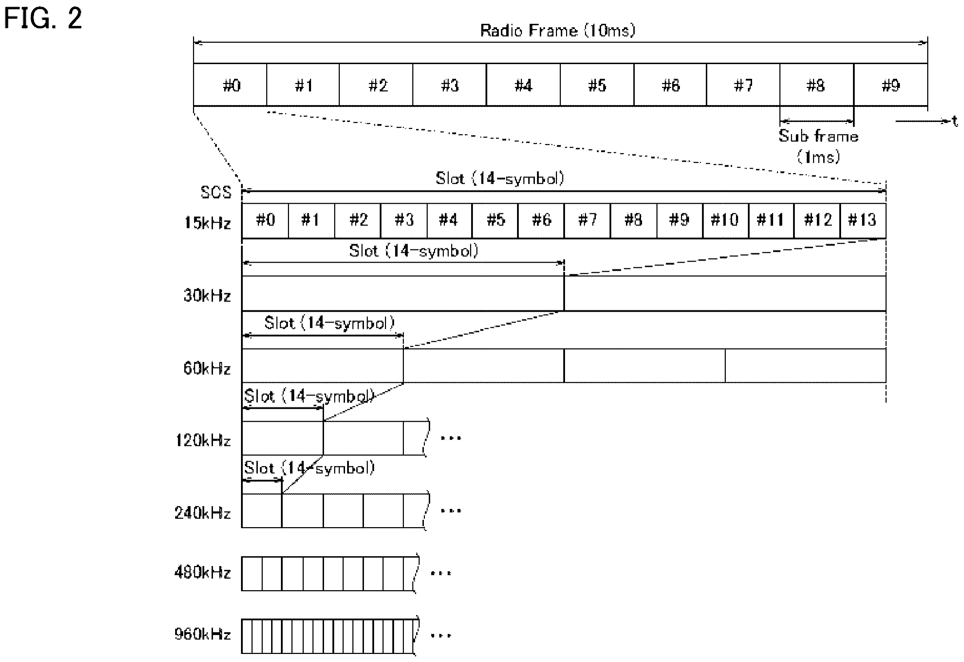

FIG. 2 is a diagram illustrating a configuration example of a radio frame, a subframe, and a slot used in the radio communication system 10.

As illustrated in FIG. 2, one slot includes 14 symbols, and a symbol period (and a slot period) becomes shorter as the SCS becomes larger (wider). Note that the number of symbols constituting one slot is not necessarily 14 symbols (for example, 28 symbols or 56 symbols). The number of slots per subframe may be different depending on the SCS. The SCS may be wider than 240 kHz (for example, 480 kHz or 960 kHz, as illustrated in FIG. 2).

Note that, a time direction (t) illustrated in FIG. 2 may be called a time domain, a symbol period, a symbol time, or the like. In addition, a frequency direction may be called a frequency domain, a resource block, a subcarrier, a BWP (Bandwidth part), or the like.

The radio communication system 10 can support coverage enhancement (CE), which increases the coverage of a cell (or may be a physical channel) formed by the gNB 100. Coverage enhancement may provide a mechanism for increasing the reception success percentage of various physical channels.

For example, the gNB 100 can support a repetition transmission of a PDSCH (Physical Downlink Shared Channel), and the UE 200 can support a repetition transmission of a PUSCH (Physical Uplink Shared Channel).

Multiple types of UEs 200 may be used in the radio communication system 10. For example, as the UE 200, there may be multiple types of terminals having different functions or performance, or supporting different 3GPP Releases. The type may be replaced with other terms, such as a generation or release. Such UEs may be called enhanced UEs or legacy UEs.

### (2) Functional block configuration of radio communication system

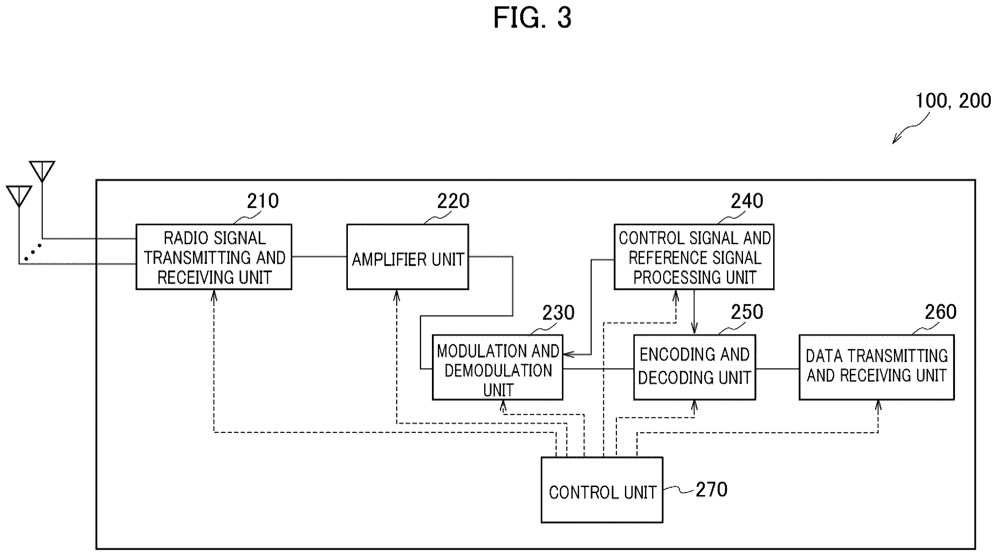

Next, a functional block configuration of the radio communication system 10 will be described. Specifically, a functional block configuration of the UE 200 will be described. FIG. 3 is a functional block configuration diagram of the gNB 100 and the UE 200.

As illustrated in FIG. 3, the UE 200 includes a radio signal transmitting and receiving unit 210, an amplifier unit 220, a modulation and demodulation unit 230, a control signal and reference signal processing unit 240, an encoding and decoding unit 250, a data transmitting and receiving unit 260, and a control unit 270.

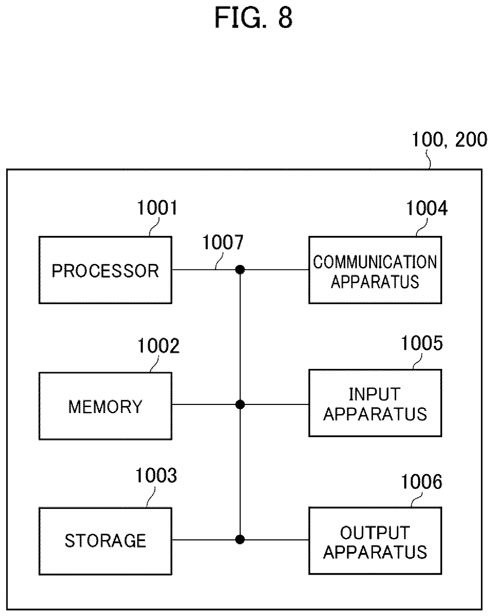

Note that in FIG. 3, only the main functional blocks related to the description of the embodiment are illustrated, and the UE 200 includes other functional blocks (for example, a power supply unit). FIG. 3 illustrates the functional block configuration of the UE 200. For the hardware configuration, reference is made to FIG. 8.

The radio signal transmitting and receiving unit 210 transmits and receives a radio signal according to NR. The radio signal transmitting and receiving unit 210 can be compatible with Massive MIMO that generates a beam with higher directivity by controlling radio (RF) signals transmitted from multiple antenna elements, carrier aggregation (CA) that uses multiple component carriers (CCs) in a bundle, dual connectivity (DC) that performs communication at the same time between the UE and each of two NG-RAN Nodes, and the like.

The radio signal transmitting and receiving unit 210 may transmit a physical uplink shared channel. Specifically, the radio signal transmitting and receiving unit 210 may transmit a PUSCH to a network (gNB 100).

The radio signal transmitting and receiving unit 210 may support a PUSCH repetition transmission (Repetition).

Multiple types of PUSCH repetition transmission may be specified. Specifically, Repetition type A and Repetition type B may be specified. Repetition type A may be interpreted as a form where a PUSCH allocated in a slot is repeatedly transmitted. That is, the PUSCH has 14 or fewer symbols, and there is no possibility of being allocated across multiple slots (adjacent slots).

In contrast, Repetition type B may be interpreted as a repetition transmission of a PUSCH for which more than 15 symbols may be allocated. In the present embodiment, it may be acceptable to allocate such a PUSCH across multiple slots.

The radio signal transmitting and receiving unit 210 may transmit a random access preamble as a first message (hereinafter, Msg1) in the random access channel procedure (hereinafter, RACH (Random Access Channel) procedure). The first message may be called specific message.

The radio signal transmitting and receiving unit 210 may receive a second message (hereinafter, Msg2) as a response message (random access response (RAR)) to the Msg1 in the RACH procedure.

After receiving the Msg2, the radio signal transmitting and receiving unit 210 may transmit a third message (hereinafter, Msg3) via a PUSCH in the RACH procedure.

The radio signal transmitting and receiving unit 210 may receive a fourth message (hereinafter, Msg4) as a response message to the Msg3 in the RACH procedure (3GPP TS38.321 V16.2.1 §5.1 "Random Access procedure").

For example, the Msg1 may be transmitted via a PRACH (Physical Random Access Channel). The Msg1 may be called PRACH Preamble. The Msg2 may be transmitted via a PDSCH. The Msg2 may be called RAR (Random Access Response). The Msg3 may be called RRC Connection Request. The Msg4 may be called RRC Connection Setup.

The Msg3 may also be called PUSCH scheduled using an RAR UL grant, or PUSCH scheduled using a DCI scrambled by Temporary Cell-Radio Network Temporary Identifier (TC-RNTI).

The radio signal transmitting and receiving unit 210 performs a repetition transmission of the Msg3. In the present embodiment, the radio signal transmitting and receiving unit 210 may include a transmitting unit that repeatedly transmits a message in the random access channel procedure. Details of the repetition transmission of the Msg3 will be described below.

The amplifier unit 220 is configured with a PA (Power Amplifier) / LNA (Low Noise Amplifier) or the like. The amplifier unit 220 amplifies a signal output from the modulation and demodulation unit 230 to a predetermined power level. The amplifier unit 220 amplifies an RF signal output from the radio signal transmitting and receiving unit 210.

The modulation and demodulation unit 230 performs data modulation and demodulation, transmission power configuration, resource block allocation, and the like for each predetermined communication destination (gNB 100 or the like). In the modulation and demodulation unit 230, Cyclic Prefix-Orthogonal Frequency Division Multiplexing (CP-OFDM) / Discrete Fourier Transform-Spread (DFT-S-OFDM) may be applied. DFT-S-OFDM may be used not only for uplink (UL) but also for downlink (DL).

The control signal and reference signal processing unit 240 performs processing related to various control signals transmitted and received by the UE 200, and processing related to various reference signals transmitted and received by the UE 200.

Specifically, the control signal and reference signal processing unit 240 receives various control signals transmitted from the gNB 100 via a predetermined control channel, for example, a control signal of a radio resource control layer (RRC). The control signal and reference signal processing unit 240 transmits various control signals to the gNB 100 via a predetermined control channel.

The control signal and reference signal processing unit 240 performs processing using a reference signal (RS), such as a Demodulation Reference Signal (DMRS) and a Phase Tracking Reference Signal (PTRS).

The DMRS (Demodulation Reference Signal) is a known terminal-specific reference signal (pilot signal) between a base station and a terminal for estimating a phasing channel used for data demodulation. The PTRS is a terminal-specific reference signal designed for the purpose of estimating phase noise that is an issue in high frequency bands.

Note that the reference signal may include a Channel State Information-Reference Signal (CSI-RS), a Sounding Reference Signal (SRS), and a Positioning Reference Signal (PRS) for position information, in addition to the DMRS and the PTRS.

The channel includes a control channel and a data channel. The control channel may include a PDCCH (Physical Downlink Control Channel), a PUCCH (Physical Uplink Control Channel), a RACH (Random Access Channel), Downlink Control Information (DCI) including a Random Access Radio Network Temporary Identifier (RA-RNTI)), and a Physical Broadcast Channel (PBCH).

The data channel includes a PDSCH (Physical Downlink Shared Channel), a PUSCH (Physical Uplink Shared Channel), and the like. Data may mean information transmitted via the data channel.

The control signal and reference signal processing unit 240 may transmit a random access report (RACH report) to the network. The RACH report may include a result related to the RACH procedure and may include a quality threshold (threshold of RSRP (Reference Signal Received Power) or the like) applied to the RACH procedure.

In particular, in the present embodiment, the control signal and reference signal processing unit 240 may transmit to the network a random access report including information indicating whether or not a repetition transmission (Repetition) of a specific message in the random access procedure has been performed. In the present embodiment, the control signal and reference signal processing unit 240 may include a transmitting unit.

Specifically, the control signal and reference signal processing unit 240 may transmit to the gNB 100 a RACH report including information indicating that the Msg1 repetition, that is, the Multiple PRACH transmission has been performed. Note that although a target is the Msg1 (random access preamble) here, another message may be the target, for example, the Msg3 repetition.

The control signal and reference signal processing unit 240 may transmit a RACH report including downlink (DL) quality at a time when the Multiple PRACH transmission is performed. Specifically, the control signal and reference signal processing unit 240 may transmit a RACH report including DL quality (at least one of RSRP, RSRQ (Reference Signal Received Quality, or SINR (Signal-to-Interference plus Noise power Ratio)) at a time when the Multiple PRACH transmission is triggered.

The control signal and reference signal processing unit 240 may report whether or not DL quality has fallen below a predetermined threshold value, or may report a threshold value below which the DL quality has fallen.

The control signal and reference signal processing unit 240 may transmit a RACH report including information on uplink (UL) transmission power at a time when the Multiple PRACH transmission is performed. Specifically, the control signal and reference signal processing unit 240 may report actual UL transmission power or UL power head room of the UE 200 at a time when the Multiple PRACH transmission is triggered, or may report that UL transmission power of the UE exceeds a predetermined threshold. The control signal and reference signal processing unit 240 may report the number of times that the UE 200 performs power ramping during the Multiple PRACH transmission. The power ramping may be interpreted as an operation to stepwise increase of power in the Msg1 (random access preamble) repetition transmission in the RACH procedure.

When the Multiple PRACH transmission is performed using a different beam, the control signal and reference signal processing unit 240 may transmit a RACH report including identification information and quality of the beam. Specifically, when the Multiple PRACH transmission, that is, the Msg1 repetition transmission is performed using different multiple beams, the control signal and reference signal processing unit 240 can report an index (SSB (SS (Synchronization Signal) / PBCH (Physical Broadcast Channel) Block) index may be used) and beam quality (RSRP or the like may be used) of the beams.

The control signal and reference signal processing unit 240 may transmit a RACH report including at least either information on a random access channel (PRACH) occasion where the Multiple PRACH transmission is performed, or the number of times the Multiple PRACH transmission is performed. Specifically, the control signal and reference signal processing unit 240 may report the PRACH occasion (an index of a PRACH Occasion (RO), a group of ROs, or a list of ROs). The control signal and reference signal processing unit 240 may report the number of times the PRACH (Msg1) transmission is repeated in the Multiple PRACH transmission.

The encoding and decoding unit 250 performs data division / concatenation, channel coding / decoding, and the like for each predetermined communication destination (gNB 100 or another gNB).

Specifically, the encoding and decoding unit 250 divides data output from the data transmitting and receiving unit 260 into predetermined sizes and performs channel coding on the divided data. The encoding and decoding unit 250 also decodes data output from the modulation and demodulation unit 230 and concatenates the decoded data.

The data transmitting and receiving unit 260 performs transmission and reception for a Protocol Data Unit (PDU) and a Service Data Unit (SDU). Specifically, the data transmitting and receiving unit 260 performs assembly and disassembly for the PDU and the SDU in multiple layers (a medium access control layer (MAC), a radio link control layer (RLC), a packet data convergence protocol layer (PDCP), and the like). The data transmitting and receiving unit 260 performs error correction and retransmission control of data, based on a Hybrid ARQ (Hybrid automatic repeat request).

The control unit 270 controls each functional block configuring the UE 200. The control unit 270 can perform the random access channel procedure. In particular, in the present embodiment, the control unit 270 performs control related to a repetition transmission of a specific message in the random access channel procedure.

Specifically, when coverage of UL is insufficient, and it is difficult for PRACH (Msg1) to be delivered to the gNB 100, the control unit 270 can instruct the control signal and reference signal processing unit 240 to perform a repetition transmission of the Msg1, that is, the Msg1 repetition (Multiple PRACH transmission).

When performing the Multiple PRACH transmission, the control unit 270 may cause the control signal and reference signal processing unit 240 to transmit a RACH report including information on the Multiple PRACH transmission.

The control unit 270 may configure a random access resource, based on whether the random access channel procedure has two steps or four steps. Specifically, when falling back from a 2-step RACH procedure (2-step RACH) to a 4-step RACH procedure (4-step RACH), the control unit 270 may change the contents of the RA procedure and configure a random access resource, according to whether or not the Msg3 repetition is applied. Note that the 2-step RACH may be called CFRA (Contention Free RACH), and the 4-step RACH may be called CBRA (Contention-Based RACH).

Note that the control signal and reference signal processing unit 240 of the gNB 100 may include a receiving unit for receiving a RACH report (or UE report) including information on the multiple PRACH transmission.

### (3) Operation of radio communication system

Next, operation of the radio communication system 10 will be described. Specifically, operation related to the message (Msg3) Repetition of the RACH procedure will be described.

### (3.1) Assumption

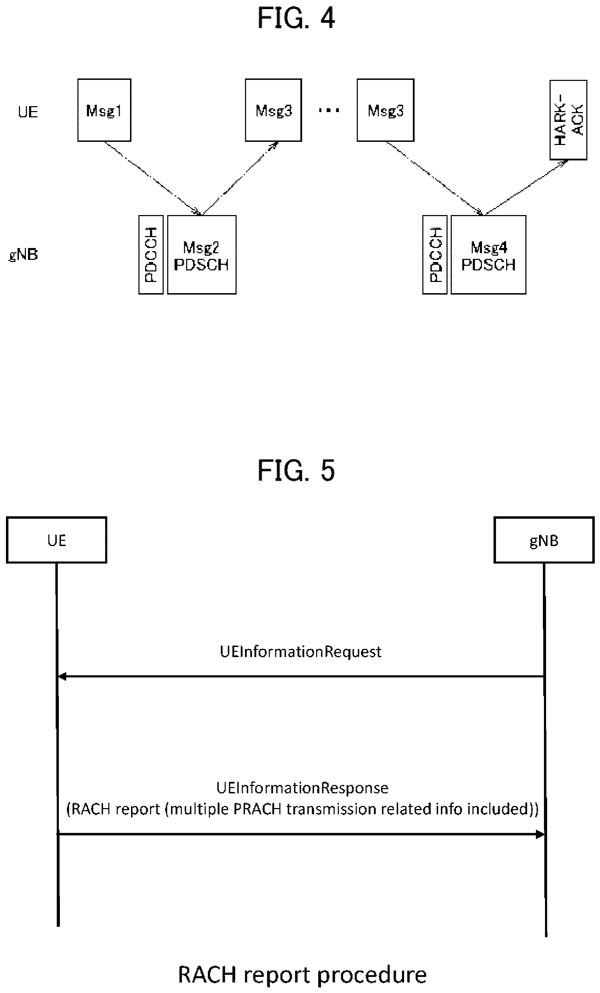

FIG. 4 illustrates an example of a random access sequence including the Msg3 Repetition. As illustrated in FIG. 4, the UE 200 first transmits a Msg1 to the NG-RAN 20 (gNB 100) according to the RACH procedure. The Msg1 may be called random access preamble as described above.

The UE 200 receives a Msg2 corresponding to the Msg1 from the NG-RAN 20. The UE 200 transmits the Msg3 corresponding to the Msg2 to the NG-RAN 20. As illustrated in FIG. 4, the Msg3 may be repeatedly transmitted. Note that although not illustrated, the Msg1 or the like may be repeatedly transmitted.

The UE 200 may receive a Msg4 corresponding to any one of Msgs3 from the NG-RAN 20. The UE 200 may transmit to the NG-RAN 20 an acknowledgment (HARQ (Hybrid Automatic repeat request)-ACK) of the Msg4.

In the present embodiment, as described above, the Msg1 Repetition (Multiple PRACH transmission) may also be supported. When performing the Multiple PRACH transmission, the UE 200 can transmit a RACH report including information on the Multiple PRACH transmission, to the network (may be gNB 100 or other RAN node).

An operation example regarding the RACH report including information on the Multiple PRACH transmission will be described below.

### (3.2) Operation example

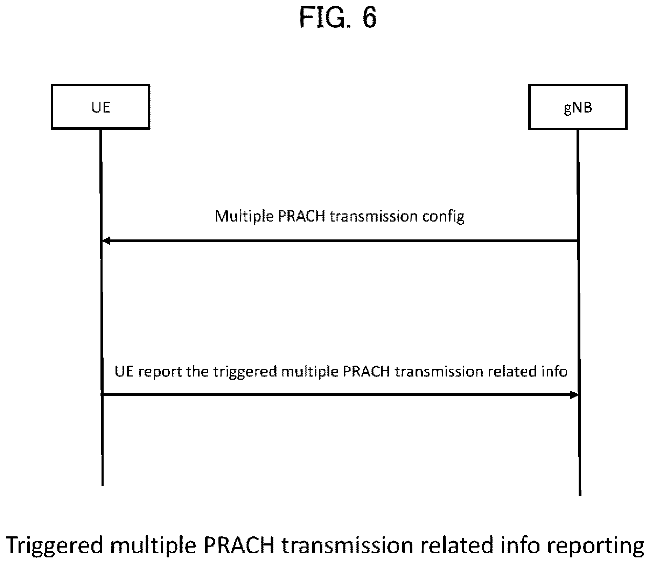

FIG. 5 illustrates a sequence of the RACH report. FIG. 6 illustrates a sequence of reporting information on the Multiple PRACH transmission.

As illustrated in FIG. 5, the UE 200 may return a UEInformationResponse to the gNB 100 in response to a UEInformationRequest transmitted from the gNB 100. The UEInformationResponse can include a RACH report. The RACH report may include information on the Multiple PRACH transmission.

As illustrated in FIG. 6, the UE 200 may receive a configuration related to the Multiple PRACH transmission from the gNB 100. When performing (triggering) the Multiple PRACH transmission, the UE 200 may report to the gNB 100 information on the Multiple PRACH transmission as a UE report.

The RACH report (or UE report) may include the following information on the Multiple PRACH transmission.

(i) Indication indicating whether a Multiple PRACH transmission has been triggered (may be called "an indication shows whether multiple PRACH transmission is triggered or not")
(ii) DL quality (RSRP, RSRQ, SINR) when a Multiple PRACH transmission is triggered

Whether the DL quality is below a predetermined threshold may be reported. The threshold may be reported. When the DL quality is below multiple predetermined thresholds, it may be reported that the DL quality is below the multiple predetermined thresholds, or that the DL quality is below the lowest threshold. The threshold may be reported.

(iii) The actual UL transmission power or the UL power head room at the UE when a Multiple PRACH transmission is triggered, or that the UL transmission power of the UE exceeds a predetermined threshold.

When the UL transmission power of the RACH exceeds a predetermined threshold, the Multiple PRACH transmission may be triggered.

(iv) When different beams are used during a Multiple PRACH transmission, that is, the Multiple PRACH transmission is performed using different beams, the beam index (for example, SSB index) and the quality of the beam
(v) Number of repetitions of the PRACH transmission during the Multiple PRACH transmission
For example, the gNB 100 may configure the number of repetitions as {2, 4, 8} to the UE 200, and the UE 200 may determine the number of Repetitions to be performed by referring to a DL quality threshold mapped to the DL quality or the number of Repetitions. The number of Repetitions actually determined by the UE 200 may be reported.

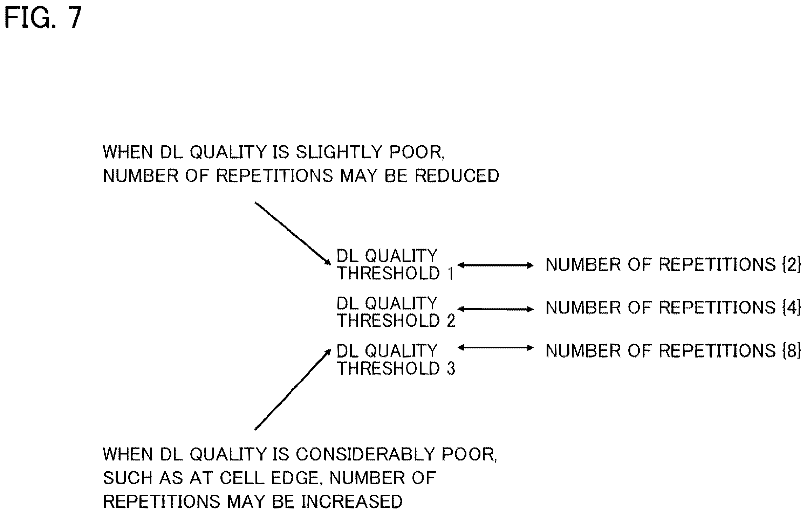

FIG. 7 illustrates an example of mapping between the DL quality threshold and the number of Repetitions. As illustrated in FIG. 7, for example, two Repetitions may be mapped to a DL quality threshold 1, four Repetitions may be mapped to a DL quality threshold 2, and eight Repetitions may be mapped to a DL quality threshold 3. The DL quality threshold 1 is the best, and the DL quality threshold 3 is the worst.

As illustrated in FIG. 7, when the DL quality is slightly poor, the number of Repetitions may be reduced (for example, two times mapped to the DL quality threshold 1). In contrast, when the DL quality is considerably poor, such as at an edge of a cell, the number of Repetitions may be increased (for example, eight times mapped to the DL quality threshold 3).

(vi) Number of times the UE 200 performs power ramping during a Multiple PRACH transmission
(vii) Number of times the UE 200 performs power ramping before a Multiple PRACH transmission is triggered
It may be reported that the number of power ramping times exceeds a predetermined threshold. When the number of power ramping times of the RACH of the UE 200 exceeds a predetermined threshold, the Multiple PRACH transmission may be triggered.

(viii) An RO (RACH Occasions) used during the Multiple PRACH transmission, an RO index of the RO, or an RO group or RO list used
An RO group may refer to multiple time-division multiplexed (TDM) ROs or multiple frequency-division multiplexed (FDM) ROs.

(ix) A separate preamble when the separate preamble is used in a Multiple PRACH transmission
(x) A separate RO when the separate RO is used in a Multiple PRACH transmission
The above contents may each be reported for 2-step RACH and 4-step RACH. That is, contention based RACH (CBRA) and contention free RACH (CFRA) may be reported.

The RACH report (or UE report) may include an indication that both the Msg1 repetition (Multiple PRACH transmission) and the Msg3 repetition are used or triggered, or an indication of each repetition.

When a fallback described below occurs, the UE 200 may report the occurrence of the fallback to the gNB 100.

· Case 1: Fallback from legacy RACH to Msg1 repetition
· Case 2: Fallback from Msg1 repetition with lower number to Msg1 repetition with higher number
· Case 3: Fallback from 2-step RACH to 4-step RACH with Msg1 repetition
· Case 4: Fallback from CFRA to CBRA with Msg1 repetition

### (4) Operation and effect

According to the above-described embodiment, the following operation and effect can be obtained. Specifically, the UE 200 can transmit to the network (gNB 100), a RACH report (or UE report) including information indicating whether or not the Multiple PRACH transmission in the random access procedure has been performed.

The gNB 100 can reliably recognize that the Multiple PRACH transmission has been performed, and can estimate under what condition the UE 200 has triggered the multiple PRACH transmission. Thus, the UE 200 can contribute to realizing a more highly accurate random access procedure.

In the present embodiment, the UE 200 can transmit a RACH report including downlink (DL) quality at a time when the Multiple PRACH transmission is performed. The UE 200 can transmit a RACH report including information on uplink (UL) transmission power at a time when the Multiple PRACH transmission is performed. Thus, the gNB 100 can more reliably recognize under what condition the UE 200 has triggered the Multiple PRACH transmission, and improvement of the quality, and the like, can be achieved.

In the present embodiment, when Multiple PRACH transmission is performed using a different beam, a RACH report can be transmitted that includes identification information and quality of the beam. Thus, the gNB 100 can reliably recognize the beam used for the Multiple PRACH transmission, and improvement of the quality, and the like, can be achieved.

In the present embodiment, the UE 200 can transmit a RACH report including at least either information on a random access channel (PRACH) occasion (RO) where the Multiple PRACH transmission has been performed, or the number of times the Multiple PRACH transmission has been performed. Thus, the gNB 100 can reliably recognize the RO where the Multiple PRACH transmission has been performed, or the number of times the Multiple PRACH transmission has been performed, and improvement of the quality, and the like, can be achieved.

### (5) Other embodiments

While the contents of the present proposal have been described with reference to examples, the present proposal is not limited to these descriptions, and it is obvious to those skilled in the art that various modifications and improvements are possible.

For example, in the above-described embodiment, the term Multiple PRACH transmission is mainly used, but the Multiple PRACH transmission may be called PRACH repetition or Msg1 repetition.

In the above-described embodiment, although an embodiment related to the Msg1 Repetition has been described, the above-described operation related to the RACH report may be applied to a message in the RACH procedure or other uplink channel.

In the above description, configure, activate, update, indicate, enable, specify, and select may be read interchangeably. Similarly, link, associate, correspond, and map may be read interchangeably, and allocate, assign, monitor, and map may also be read interchangeably.

Furthermore, specific, dedicated, UE-specific, and UE-individual may be read interchangeably. Similarly, common, shared, group-common, UE-common, and UE-shared may be read interchangeably.

In this disclosure, "precoding", "precoder", "weight (precoding weight)", "Quasi-Co-Location (QCL)", "Transmission Configuration Indication state (TCI state)", "spatial relation", "spatial domain filter", "transmission power", "phase rotation", "antenna port", "antenna port group", "layer", "number of layers", "rank", "resource", "resource set", "resource group", "beam", "beam width", "beam angle", "antenna", "antenna element", "panel", and similar terms may be used interchangeably.

Note that the block diagrams (FIG. 3) that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)", a "transmitter", and the like. The method for implementing each component is not particularly limited as described above.

The eNB 100 and the UE 200 (apparatuses) which are described above may function as a computer that executes the processes of the radio communication method of the present disclosure. FIG. 8 is a diagram to illustrating an example of a hardware structure of the apparatuses. As illustrated in FIG. 8, the apparatuses may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a unit, and so on can be interchangeably interpreted. The hardware structure of the apparatuses may be configured to include one or more of apparatuses shown in the drawings, or may be configured not to include part of apparatuses.

Each functional block of the apparatuses (see FIG. 3) is implemented by any of hardware elements of the computer apparatus or a combination of the hardware elements.

Each function of the apparatuses is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The memory 1002 is a computer-readable recording medium, and may be constituted with, for example, at least one of a Read Only Memory (ROM), an Erasable Programmable ROM (EPROM), an Electrically Erasable Programmable ROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the method according to one embodiment of the present disclosure.

The storage 1003 is a computer-readable recording medium, and may be constituted with, for example, at least one of an optical disk such as a Compact Disc ROM (CD-ROM), a hard disk drive, a flexible disk, a magneto-optical disk (for example, a compact disk, a digital versatile disk, Blu-ray (Registered Trademark) disk), a smart card, a flash memory (for example, a card, a stick, a key drive), a floppy (Registered Trademark) disk, a magnetic strip, and other appropriate storage media. The storage 1003 may be referred to as "auxiliary storage apparatus". The above recording medium may be a database including the memory 1002 and/or the storage 1003, a server, or any other appropriate medium.

The communication apparatus 1004 is hardware (transmitting/receiving device) for allowing inter-computer communication via at least one of wired and wireless networks, and may be referred to as, for example, a "network device", a "network controller", a "network card", a "communication module", and so on.

The communication apparatus 1004 may be configured to include a high frequency switch, a duplexer, a filter, a frequency synthesizer, and so on in order to realize, for example, at least one of frequency division duplex (FDD) and time division duplex (TDD).

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the apparatuses may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

Notification of information is by no means limited to the aspects/embodiments described in the present disclosure, and other methods may be used as well. For example, notification of information in the present disclosure may be implemented by using physical layer signaling (for example, Downlink Control Information (DCI), Uplink Control Information (UCI)), higher layer signaling (for example, RRC signaling, Medium Access Control (MAC) signaling, broadcast information (Master Information Block (MIB), System Information Block (SIB), and so on)), and other signals or combinations of these. Also, RRC signaling may be referred to as an "RRC message", and can be, for example, an RRC Connection Setup message, an RRC Connection Reconfiguration message, and so on.

The aspects/embodiments illustrated in the present disclosure may be applied to Long Term Evolution (LTE), LTE-Advanced (LTE-A), SUPER 3G, IMT-Advanced, 4th generation mobile communication system (4G), 5th generation mobile communication system (5G), 6th generation mobile communication system (6G), xth generation mobile communication system (xG) (x is, for example, an integer or a decimal), Future Radio Access (FRA), New Radio (NR), W-CDMA (registered trademark), GSM (registered trademark), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate systems, next-generation systems that are enhanced based on these, or combinations of these. A plurality of systems may be combined (for example, a combination of at least one of LTE and LTE-A, and 5G, and the like) for application.

The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

Operations which have been described in the present disclosure to be performed by a base station may, in some cases, be performed by an upper node of the base station. In a network including one or a plurality of network nodes with the base station, it is clear that various operations that are performed to communicate with the terminal can be performed by the base station, one or more network nodes (for example, MME, S-GW, and so on may be possible, but these are not limiting) other than the base station, or combinations of these. According to the above, a case is described in which there is a single network node other than the base station. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Each aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and a term required for understanding of the present specification may be replaced by a term having the same or similar meaning. For example, at least one of a channel or a symbol may be a signal (signaling). Further, a signal may be a message. Further, the Component Carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms such as a "Base Station (BS)", a "radio base station", a "fixed station", a "NodeB", an "eNB (eNodeB)", a "gNB (gNodeB)", an "access point", a "transmission point", a "reception point", a "transmission/reception point", a "cell", a "sector", a "cell group", a "carrier", a "component carrier", and so on can be used interchangeably. The base station may be referred to as the terms such as a "macro cell", a "small cell", a "femto cell", a "pico cell", and so on.

The base station can accommodate one or a plurality of (for example, three) cells (also called sectors). When the base station accommodates a plurality of cells, the entire coverage area of the base station can be partitioned into multiple smaller areas, and each smaller area can provide communication services through base station subsystems (for example, indoor small base stations (Remote Radio Heads (RRHs))).

The term "cell" or "sector" refers to part of or the entire coverage area of at least one of the base station and a base station subsystem that provides communication services within this coverage.

In the present disclosure, the transmission of information from the base station to the terminal may be interpreted as the instruction of control or operation to the terminal based on the information by the base station.

In the present disclosure, the terms "Mobile Station (MS)", "user terminal", "User Equipment (UE)", and "terminal" may be used interchangeably.

A mobile station may be referred to as a "subscriber station", a "mobile unit", a "subscriber unit", a "wireless unit", a "remote unit", a "mobile device", a "wireless device", a "wireless communication device", a "remote device", a "mobile subscriber station", an "access terminal", a "mobile terminal", a "wireless terminal", a "remote terminal", a "handset", a "user agent", a "mobile client", a "client", or some other appropriate terms in some cases.

At least one of the base station and the mobile station may be referred to as a "transmitting apparatus", a "receiving apparatus", a "radio communication apparatus", and so on. Note that at least one of the base station and the mobile station may be a device mounted on a moving object, a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of the base station and the mobile station also includes an apparatus which does not necessarily move during communication operation. For example, at least one of the base station and the mobile station may be an Internet of Things (IoT) device such as a sensor.

Furthermore, the base station in the present disclosure may be interpreted as a user station (user terminal, the same applies hereinafter). For example, each aspect/embodiment of the present disclosure may be applied to the structure that replaces a communication between the base station and the user station with a communication between a plurality of user stations (for example, which may be referred to as "Device-to-Device (D2D)", "Vehicle-to-Everything (V2X)", and the like). In this case, the user stations may have the functions of the base station described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user station in the present disclosure may be interpreted as the base station. In this case, the base station may have the functions of the user station.

A radio frame may be constituted of one or a plurality of frames in the time domain. Each of one or a plurality of frames in the time domain may be referred to as a "subframe". Furthermore, a subframe may be constituted of one or a plurality of slots in the time domain. A subframe may be a fixed time length (for example, 1 ms) independent of numerology.

Numerology may be a communication parameter applied to at least one of transmission and reception of a certain signal or channel. For example, numerology may indicate at least one of a SubCarrier Spacing (SCS), a bandwidth, a symbol length, a cyclic prefix length, a Transmission Time Interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols less than the number of slots. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, the base station performs, for user terminals, scheduling of allocating radio resources (such as a frequency bandwidth and transmit power available for each user terminal) in TTI units. Note that the definition of the TTI is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot", or the like. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain.

The number of subcarriers included in an RB may be the same regardless of numerology, and, for example, may be 12. The number of subcarriers included in an RB may be determined based on numerology.

An RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "Sub-Carrier Group (SCG)", a "Resource Element Group (REG)", a "PRB pair", an "RB pair" and so on.

Furthermore, a resource block may be constituted of one or a plurality of Resource Elements (REs). For example, one RE may correspond to a radio resource field of one subcarrier and one symbol.

A Bandwidth Part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

The term "connected" or "coupled" or any variation thereof means any direct or indirect connection or coupling between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

A reference signal may be abbreviated as an "RS", and may be referred to as a "pilot", depending on which standard applies.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

"Means" included in the configuration of each of the above apparatuses may be replaced by "parts", "circuits", "devices", etc.

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

In the case where the terms "include", "including" and variations thereof are used in the present disclosure, these terms are intended to be comprehensive in the same way as the term "comprising". Further, the term "or" used in the present specification is not intended to be an "exclusive or".

In the present disclosure, where an article is added by translation, for example "a", "an", and "the", the disclosure may include that the noun following these articles is plural.

As used herein, the term "determining" may encompasses a wide variety of actions. For example, "determining" may be regarded as judging, calculating, computing, processing, deriving, investigating, looking up, search inquiry (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing and the like. That is, "determining" may be regarded as a certain type of action related to determining. Furthermore, "determining" may be regarded as "assuming", "expecting", "considering", and the like.

In this disclosure, the term "A and B are different" may mean "A and B are different from each other". It should be noted that the term "A and B are different" may mean "A and B are different from C". Terms such as "separated" or "combined" may be interpreted in the same way as the above-described "different".

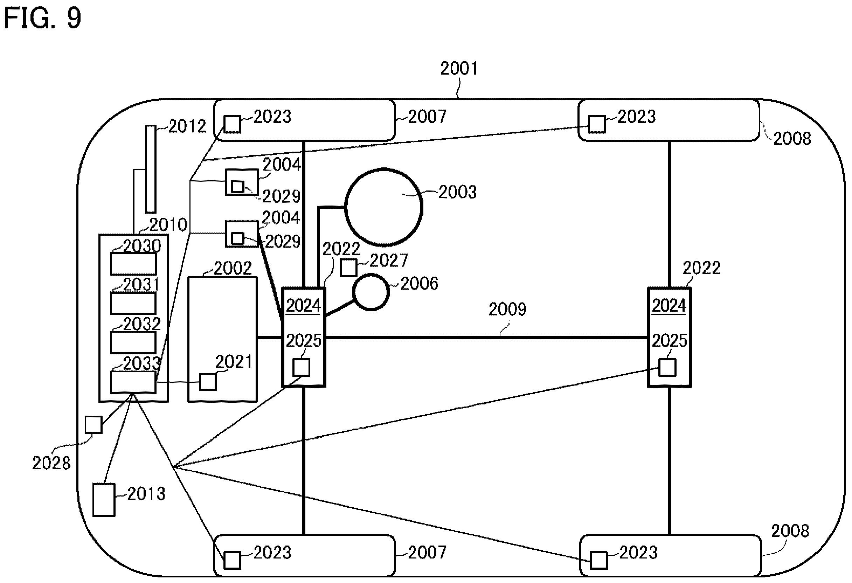

FIG. 9 illustrates an example of a configuration of a vehicle 2001. As illustrated in FIG. 9, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021 to 2029, an information service unit 2012, and a communication module 2013.

The drive unit 2002 may include, for example, an engine, a motor, and a hybrid of an engine and a motor.

The steering unit 2003 includes at least a steering wheel and is configured to steer at least one of the front wheel and the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021 to 2027 provided in the vehicle 2001. The electronic control unit 2010 may be referred to as an ECU (Electronic control unit).

The signals from the various sensors 2021 to 2028 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by an object detection sensor 2028, for detecting an obstacle, a vehicle, a pedestrian, and the like.

The information service unit 2012 includes various devices for providing various kinds of information such as driving information, traffic information, and entertainment information, including a car navigation system, an audio system, a speaker, a television, and a radio, and one or more ECUs controlling these devices.

The information service unit 2012 provides various types of multimedia information and multimedia services to the occupants of the vehicle 1 by using information obtained from the external device through the communication module 2013 or the like.

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, and an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 1 via a communication port. For example, the communication module 2013 transmits and receives data via a communication port 2033, to and from the drive unit 2002, the steering unit 2003, the accelerator pedal 2004, the brake pedal 2005, the shift lever 2006, the front wheel 2007, the rear wheel 2008, the axle 2009, the microprocessor 2031 and the memory (ROM, RAM) 2032 in the electronic control unit 2010, and sensors 2021 to 2028 provided in the vehicle 1.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 transmits the current signal from the current sensor input to the electronic control unit 2010 to an external device through radio communication. Furthermore, the communication module 2013 transmits to an external device through radio communication, the front or rear wheel rotation signal acquired by the revolution sensor 2022, the front or rear wheel pneumatic signal acquired by the pneumatic sensor 2023, the vehicle speed signal acquired by the vehicle speed sensor 2024, the acceleration signal acquired by the acceleration sensor 2025, the stepped-on accelerator pedal signal acquired by the accelerator pedal sensor 2029, the stepped-on brake pedal signal acquired by the brake pedal sensor 2026, the operation signal of the shift lever acquired by the shift lever sensor 2027, and the detection signal, acquired by the object detection sensor 2028, for detecting an obstacle, a vehicle, a pedestrian, and the like, which are inputted to the electronic control unit 2010.

The communication module 2013 receives various types of information (traffic information, signal information, inter-vehicle information, etc.) transmitted from the external devices and displays the received information on the information service unit 2012 provided in the vehicle. In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021 to 2028, etc., mounted in the vehicle 2001.

### (Appendix)

The above disclosure may be expressed as follows. A first feature is a terminal including: a control unit that performs a random access procedure; and a transmitting unit that transmits to a network, a random access report including information indicating whether or not a repetition transmission of a specific message in the random access procedure has been performed.

A second feature is the terminal in the first feature, in which the transmitting unit transmits the random access report, which includes downlink quality at a time when the repetition transmission of the specific message is performed.

A third feature is the terminal in the first or second feature, in which the transmitting unit transmits the random access report, which includes information on uplink transmission power at a time when the repetition transmission of the specific message is performed.

A fourth feature is the terminal in the first to third features, wherein the transmitting unit transmits, when the repetition transmission of the specific message is performed using a different beam, the random access report, which includes identification information and quality of the beam.

A fifth feature is the terminal in the first to fourth features, in which the transmitting unit transmits the random access report, which includes at least either information on a random access channel occasion where the repetition transmission of the specific message has been performed, or the number of times the repetition transmission of the specific message has been performed.

### [Explanation of Reference Numerals]

- 10: radio communication system
- 20: NG-RAN
- 100: eNB
- 200: UE
- 210: radio signal transmitting and receiving unit
- 220: amplifier unit
- 230: modulation and demodulation unit
- 240: control signal and reference signal processing unit
- 250: encoding and decoding unit
- 260: data transmitting and receiving unit
- 270: control unit
- 1001: processor
- 1002: memory
- 1003: storage
- 1004: communication apparatus
- 1005: input apparatus
- 1006: output apparatus
- 1007: bus
- 2001: vehicle
- 2002: drive unit
- 2003: steering unit
- 2004: accelerator pedal
- 2005: brake pedal
- 2006: shift lever
- 2007: front wheel
- 2008: rear wheel
- 2009: axle
- 2010: electronic control unit
- 2012: information service unit
- 2013: communication module
- 2021: current sensor
- 2022: revolution sensor
- 2023: pneumatic sensor
- 2024: vehicle speed sensor
- 2025: acceleration sensor
- 2026: brake pedal sensor
- 2027: shift lever sensor
- 2028: object detection sensor
- 2029: accelerator pedal sensor
- 2030: driving support system unit
- 2031: microprocessor
- 2032: memory (ROM, RAM)
- 2033: communication port

## Claims

1. A terminal comprising:
a control unit that performs a random access procedure; and
a transmitting unit that transmits to a network, a random access report including information indicating whether or not a repetition transmission of a specific message in the random access procedure has been performed.

2. The terminal according to claim 1, wherein the transmitting unit transmits the random access report, which includes downlink quality at a time when the repetition transmission of the specific message is performed.

3. The terminal according to claim 1, wherein the transmitting unit transmits the random access report, which includes information on uplink transmission power at a time when the repetition transmission of the specific message is performed.

4. The terminal according to claim 1, wherein the transmitting unit transmits, when the repetition transmission of the specific message is performed using a different beam, the random access report, which includes identification information and quality of the beam.

5. The terminal according to claim 1, wherein the transmitting unit transmits the random access report, which includes at least either information on a random access channel occasion where the repetition transmission of the specific message has been performed, or the number of times the repetition transmission of the specific message has been performed.

6. A radio communication method in a terminal, comprising:
a step of performing a random access procedure; and
a step of transmitting to a network, a random access report including information indicating whether or not a repetition transmission of a specific message in the random access procedure has been performed.
